# EUROPEAN PATENT APPLICATION

(11) **EP 1 211 349 A2**
(43) Date of publication of application: **05.06.2002**
(21) Application number: 01127743.1
(22) Date of filing: 21.11.2001
(51) Int. Cl.: D07B 1/06, B60C 9/00

(54) **Metal cord for reinforcing rubber article**

(30) Priority: 22.11.2000 JP 2000355994
(71) Applicant: SUMITOMO RUBBER INDUSTRIES, LTD., Hyogo-ken (JP)
(72) Inventor: Miyazaki, Shinichi, Sumitomo Rubber Industries Ltd, Kobe-shi, Hyogo-ken (JP); Yamazaki, Kazumi, Sumitomo Rubber Industries Ltd., Kobe-shi, Hyogo-ken (JP); Toda, Osamu, c/o Sumitomo Rubber Industries Ltd., Kobe-shi, Hyogo-ken (JP)
(74) Representative: Manitz, Finsterwald & Partner GbR

(57) **Abstract**

The invention can improve rubber permeability and a fatigue resistance in a metal cord in a layer structure. There is formed layer structure in which a sheath (3) constituted by 1 to 6 filaments (Fb) is formed around a core constituted by 1 filament (Fa). The filament (Fa) is constituted by a waved filament (5) waved in a two-dimensional wave shape in a state before being bundled, and is twisted with the sheath while applying the torsion so as to be formed in a three-dimensional wave shape within a cord.

## Description

### BACKGROUND OF THE INVENTION

### FIELD OF THE INVENTION

The present invention relates to a metal cord used as a reinforcing member for a rubber article such as a pneumatic tire or the like, and particularly relates to a metal cord for reinforcing a rubber article which is structured such that a rubber easily intrudes into an inner portion of the rubber so as to improve a corrosion resistance as well as to improve a fatigue resistance.

### DESCRIPTION OF THE BACKGROUND ART

For example, in general, a metal cord supplied to the pneumatic tire widely employs a layer structure in which normally filaments having the same wire diameter are closest arranged in order to increase a cord tensional strength per a cord diameter and obtain an improved fatigue resistance. However, in such a closest layer structure mentioned above, since a gap between the filaments within a sheath is small, the rubber is not sufficiently intruded into the inner portion of the cord but a cavity is easily generated, so that a moisture easily intrude within the cavity so as to corrode the cord.

Accordingly, there is proposed, for example, in Japanese Patent Publication JP-A-9-31875 gazette a matter of improving a degree of intrusion of the rubber into the inner portion of the cord by applying a two-dimensional wave-shaped modeling to a filament of a core in the layer structure and specifying a relation between a waving shape and a wire diameter of the filament.

However, in the proposal mentioned above, since the waved filament in the core is twisted with the sheath without torsion, it is still in a two-dimensional waving state even in a state of becoming the cord. Accordingly, there has been a problem that in comparison with the three-dimensional waving state, an apparent diameter of the core is small and an effect of improving the rubber intrusion is not much.

### SUMMARY OF THE INVENTION

Accordingly, an object of the present invention is to provide a metal cord for reinforcing a rubber article which on the basis of forming a core by one waved filament modeled in two-dimensional as well as twisting the waved filament with a sheath while applying the torsion, can make the waved filament in a three-dimensional wave shape within a cord, thereby increasing an apparent diameter of the core, sufficiently securing a gap between the filaments of the sheath and increasing a degree of intrusion of the rubber.

In order to achieve the object mentioned above, in accordance a first aspect of the present invention, there is provided a metal cord in a layer structure for reinforcing a rubber article including:
a core formed of one filament; and
a sheath formed of 1 to 6 filaments arranged around the core,
wherein said filament of the core is formed of a waved filament waved in a two-dimensional wave shape having crest portions and trough portions in a repeated manner, in a state before being bundled, and is twisted with said sheath while applying the torsion so as to be formed in a three-dimensional wave shape within a cord.

Further, in accordance with a second aspect of the present invention, a diameter d of the filament of the core is between 0.15 and 0.50 mm and substantially the same as that of the filament of the sheath.

### BRIEF DESCRIPTION OF THE DRAWINGS

Fig. 1 is a cross sectional view of a metal cord in accordance with an embodiment of the present invention;
Fig. 2 is a schematic side elevational view of the metal cord;
Fig. 3 is a side elevational view showing a waved shape of a filament of a core in a state before bundling;
Figs. 4A and 4B are cross sectional views showing another embodiment of a metal cord in accordance with the present invention; and
Figs. 5A and 5B are cross sectional views showing a metal cord in accordance with a comparative embodiment used in a test in Table 1.

### DESCRIPTION OF THE PREFERRED EMBODIMENTS

A description will be given below of an embodiment in accordance with the present invention with reference to the accompanying drawings.

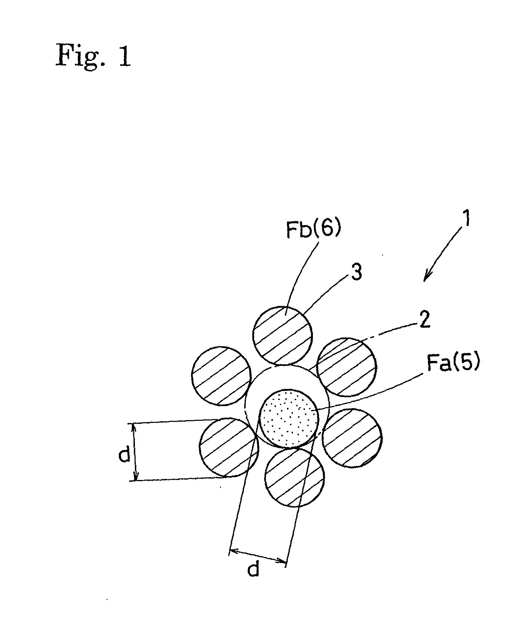

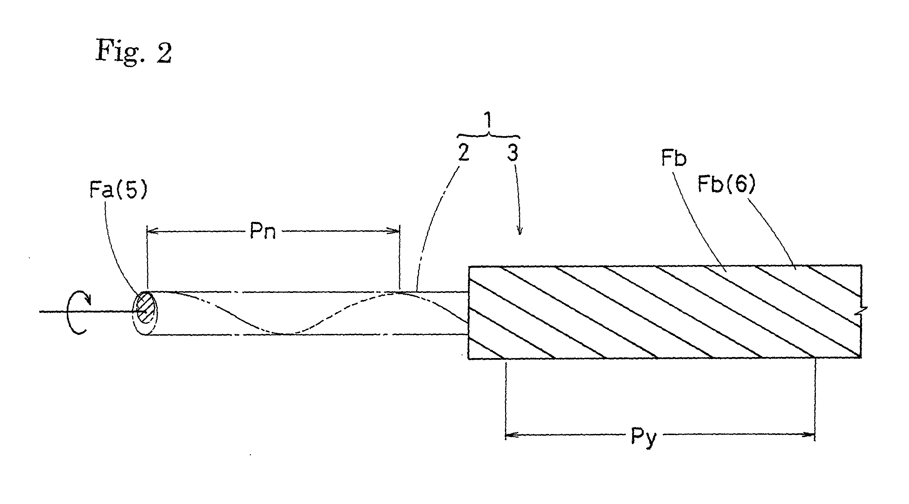

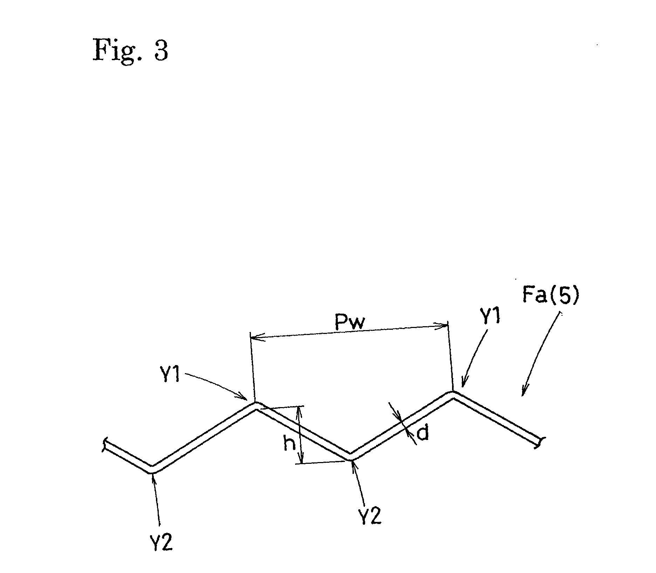

Fig. 1 is a cross sectional view showing an example of a metal cord for reinforcing a rubber article in accordance with the present invention, Fig. 2 is a schematic side elevational view of the metal cord, and Fig. 3 is a side elevational view showing a waved state of a filament of a core.

In Fig. 1, a metal core 1 for reinforcing a rubber article (hereinafter, refer to a metal cord 1) has a layer structure obtained by bundling a core 2 formed of one filament Fa and of 1 to 6 filaments Fb arranged around the core 2. In this case, in Fig. 1, there is exemplified a 1 + 6 structure in which a number of the filaments Fb of the sheath 3 is set as 6.

In the filament Fa of the core 2, as shown in Fig. 3, a waved filament 5 modeled in a two-dimensional wave shape in which crest portions Y1 and trough portions Y2 are repeated in a state before being bundled is used. In this case, in the present example, there is exemplified a case that the waved filament 5 is formed in a zigzag shape in which a straight portion Y3 is interposed between the crest portion Y1 and the trough portion Y2, however, may be formed in a sine curve shape or the like which is formed only of curves. The two-dimensional waving mentioned above is easily processed in comparison with the three-dimensional waving, for example, a spiral shape or the like, and has an advantage that a dimensional accuracy is high and stable as well as it is easy to treat.

On the contrary, a non-waved filament 6 formed in a substantially linear shape in a state before being bundled is used as the filament Fb of the seethe 3.

Then, in accordance with the present invention, as shown in Fig. 2, the metal cord 1 is formed by twisting the waved filament 5 with the sheath 3 while applying torsion. In other words, in the present example, six non-waved filament 6 are spirally wound around the core 2 formed in the three-dimensional wave shape by applying the torsion to the waved filament 5.

As mentioned above, within the metal cord 1, the two-dimensional waved filament 5 is formed in the three-dimensional wave shape due to the torsion thereof. Accordingly, the apparent diameter of the core 2 is further increased in comparison with the case having no torsion, whereby it is possible to stably secure a sufficient gap between the filaments Fb of the sheath 3 surrounding around the core and it is possible to widely improve a degree of intrusion of the rubber (rubber permeability). Further, since a fretting (a phenomenon that an abrasion is generated by a relative repeated fine slip between the filaments) can be restricted by securing the gap, a fatigue resistance can be further improved.

In this case, the metal cord 1 is made in the layer structure, because it is possible to increase the number of the filaments with respect to the cord diameter at a time of constituting the cord, so that it is possible to increase a cord strength, it is possible to increase an effect of reinforcing the rubber article and it is possible to narrow the filament at that degree so as to improve a bending fatigue property.

The number of the filament Fa used in the core 2 is required to be set to one in view of a corrosion resistance. Further, the number of the filaments Fb used in the sheath 3 is between 1 and 6, and when it is over six, the waved size in the filament Fa of the core 2 becomes too large, and is disadvantageous in strength.

In this case, it is preferable that the filament Fa and the filament Fb are set to have the same diameter, whereby it is possible to commonly use a wire extending process and it is possible to economically manufacture the cord.

At this time, in order to make the number of the filaments proper and obtain an excellent cord strength and bending fatigue, it is preferable to set the wire diameter d of the filaments Fa and Fb within a range between 0.15 and 0.50 mm. When the wire diameter d is less than 0.15 mm, it is too narrow and becomes disadvantageous in view of the cord strength, and on the contrary, when it is over 0.50 mm, it becomes disadvantageous in view of the bending fatigue property.

As shown in Fig. 3, in the waving of the filament Fa in a state before being bundled, it is preferable to respectively set a wave pitch Pw and a wave height h of the filament Fa to a range between 3.0 and 9.0 mm and a range between 0.20 and 0.80 mm, whereby it is possible to economically wave and it is possible to secure excellent rubber permeability. When the wave pitch Pw becomes smaller than 3.0 mm or the wave height h becomes larger than 0.80 mm, an amount of waving process is increased and a working cost is increased, and on the contrary, a damage applied to the filament Fa due to the process is increased so as to cause a reduction of strength. On the contrary, in the case that the wave pitch Pw is larger than 9.0 mm or the wave height h is smaller than 0.20 mm, the waving becomes too small, and an effect of improving the rubber permeability cannot be sufficiently achieved. In this case, the wave pitch Pw corresponds to a distance in a longitudinal direction between the crest portions Y1 and Y1, and the wave height h corresponds to a distance in an amplitude direction between the crest portion Y1 and the trough portion Y2.

Next, as shown in Fig. 2, it is preferable that a torsion pitch Pn at a time of twisting the filament Fa (the waved filament 5) so as to form the three-dimensional wave shape is within a range between 5.0 and 600.0 mm, when it is smaller than 5.0 mm, the apparent outer diameter of the cord becomes small, and when it is larger than 600.0 mm, an effect of making three-dimensional is reduced, so that the effect of improving the rubber permeability can not be sufficiently achieved, in both cases.

Further, a twist pitch Py of the sheath 3 twisting around the three-dimensional core 2, that is, a pitch for winding the filament Fb is preferably set to a range between 5.0 and 30.0 mm. When the twist pitch Py is smaller than 5.0 mm, an original extension of the cord is increased, a reinforcing effect is deteriorated, and a wire length between the filaments Fa and Fb is largely different, so that a stress distribution becomes unbalanced and the strength at a time of being broken tends to be reduced. Further, when the twist pitch Py is over 30.0 mm, the filament tends to be easily scattered and a shape keeping property of the cord is deteriorated.

A twisting direction of the sheath 3 may be coincided with a torsional direction of the core 2, that is, the filament Fa, or may be differentiated therefrom. Further, it is preferable in view of keeping the strength of the cord that the torsional pitch Pn is generally set to be larger than the twist pitch Py.

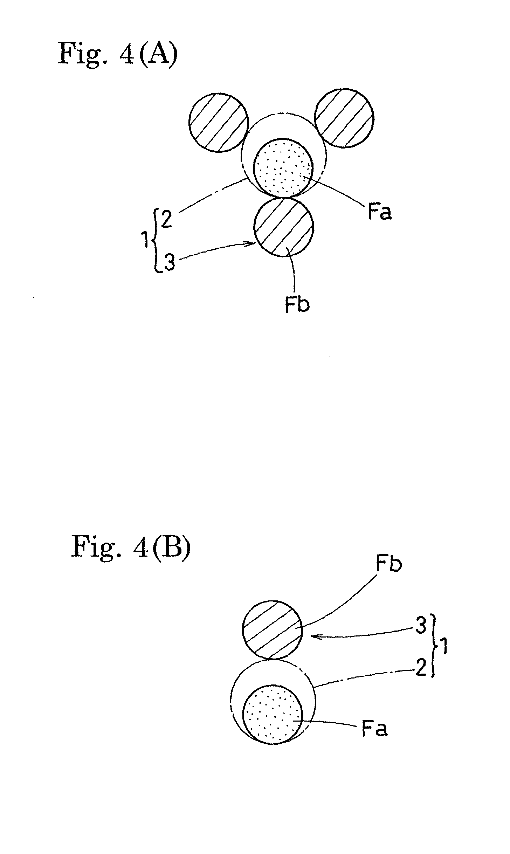

In this case, Figs. 4A and 4B show another embodiment of the metal cord 1. Fig. 4A shows a case that the sheath 3 formed of three filaments Fb is formed around a core a obtained by twisting the two-dimensional waved filament Fa, and Fig. 4B shows a case that the sheath 3 is formed of one filament Fb.

As mentioned above, the description is in detail given of the particularly preferable embodiment in accordance with the present invention, however, the present invention is not limited to the illustrated embodiment, can be modified in various aspects.

### (Embodiment)

A metal cord of a layer structure is manufactured by way of trial on the basis of the specification shown in Table 1, rubber permeability and a fatigue resistance of each of the trial cords are tested, and results thereof are described in Table 1 mentioned above.

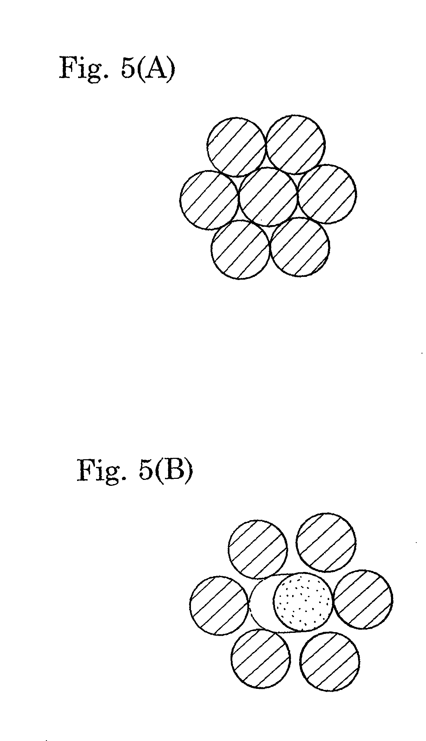

In this case, cross sectional shapes of the metal cord used in the comparative embodiments are shown in Figs. 5A and 5B.

### (1) Rubber permeability:

Test cords are inserted within an unvulcanized rubber sheet in parallel at an interval, and are vulcanized under heating and pressurizing. The test cords are taken out from the obtained vulcanized rubber sheet, the rubber is removed from the surface thereof as much as possible, the test cord is dissembled, a length of a portion in which the rubber is charged in the gap within the cord is measured about 10 cm, and rubber permeability is set by a rate of the length with respect to a whole length. The measurement mentioned above is applied to ten cords, and a measured value of the cord is set by an average value.

### (2) Fatigue resistance:

From the vulcanized rubber sheet, a repeated bending is applied on the basis of a repeated bending fatigue test (Dematia method) in proportion to JIS L1017 until the vulcanized rubber sheet is broken, and a broken number is measured. The measurement mentioned above is applied to ten rubber sheets and an average value is estimated on the basis of an index display obtained by setting a value of the comparative embodiment 1 to 100. The larger the numerical value is, the higher the fatigue resistance is, so that it is excellent.

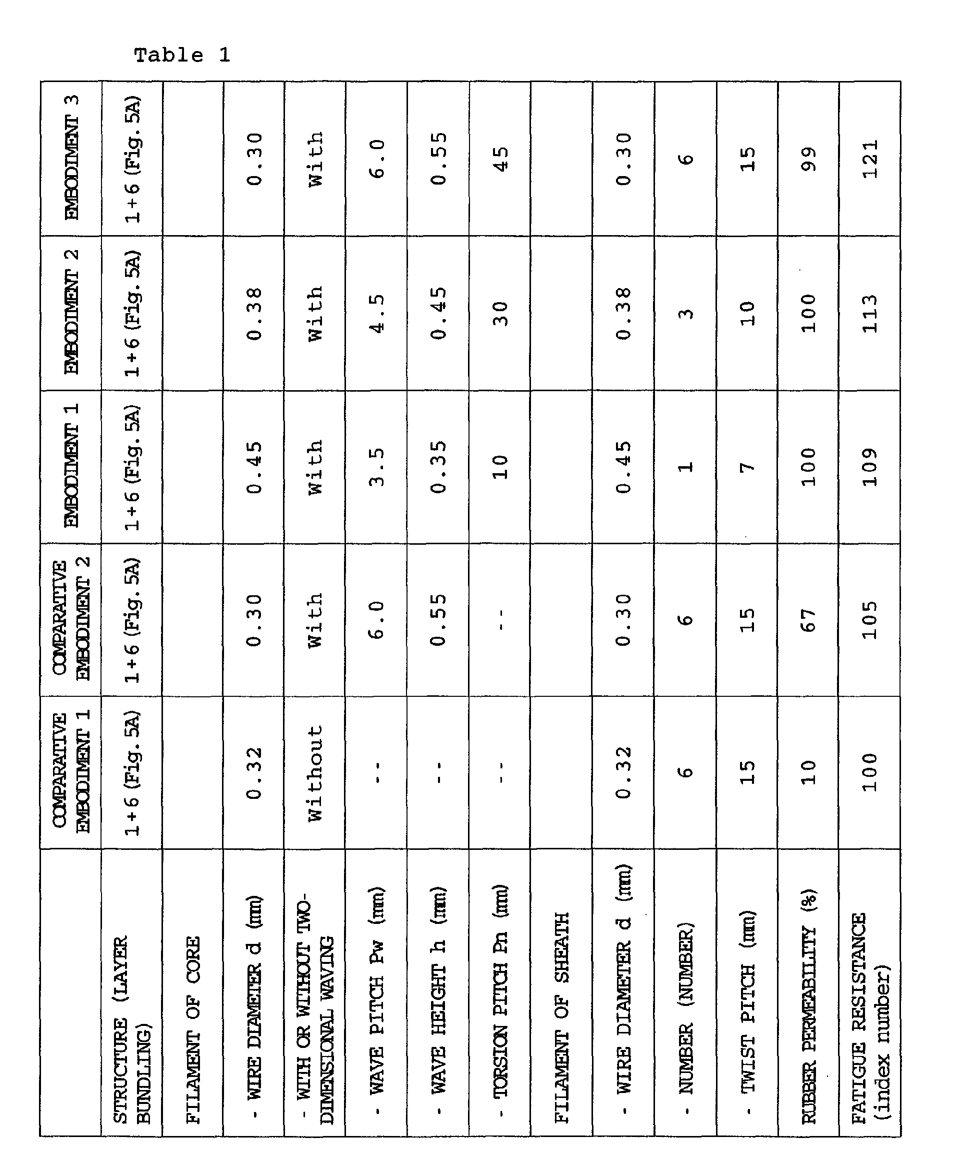

As comparing the embodiment 3 with the comparative embodiments 1 and 2, it is possible to confirm that the metal cord in accordance with the embodiment 3 of the present invention can widely improve the rubber permeability and can widely improve the fatigue resistance.

As mentioned above, in accordance with the present invention, since the core is formed by one two-dimensional waved filament and the waved filament is bonded to the sheath while being twisted, it is possible to make the waved filament in a three-dimensional wave shape within the cord. Accordingly, it is possible to sufficiently secure the gap between the filaments of the sheath and it is possible to widely increase the rubber permeability. Further, it is possible to widely improve the fatigue resistance.

## Claims

1. A metal cord for reinforcing a rubber article formed comprising:
a core formed of one filament; and
a sheath formed of 1 to 6 filaments arranged around the core,
wherein said filament of the core is formed of a waved filament waved in a two-dimensional wave shape having crest portions and trough portions in a repeated manner, in a state before being bundled, and is twisted with said sheath while applying the torsion so as to be formed in a three-dimensional wave shape within a cord.

2. The metal cord for reinforcing a rubber article as claimed in claim 1, wherein a diameter d of said filament is between 0.15 and 0.50 mm and substantially the same as that of the filament of said sheath.
